# EUROPÄISCHE PATENTSCHRIFT

(11) **EP 2 914 521 B1**
(45) Veröffentlichungstag und Bekanntmachung des Hinweises auf die Patenterteilung: **07.09.2016**
(21) Anmeldenummer: 13766946.1
(22) Anmeldetag: 23.09.2013
(51) Int. Cl.: B65G 54/02

(54) **TRANSPORTVORRICHTUNG MIT STEUERBAREM FÖRDERELEMENT**
TRANSPORT DEVICE WITH CONTROLLABLE CONVEYING ELEMENT
DISPOSITIF TRANSPORTEUR À ÉLÉMENT TRANSPORTEUR APTE À ÊTRE COMMANDÉ

(30) Priorität: 02.11.2012 DE 102012220008
(43) Veröffentlichungstag der Anmeldung: 09.09.2015
(73) Patentinhaber: Robert Bosch GmbH, 70442 Stuttgart (DE)
(72) Erfinder: VAN DE LOECHT, Heinrich, 76461 Muggensturm (DE); HANISCH, Markus, 70736 Fellbach (DE)
(86) Internationale Anmeldenummer: PCT/EP2013/069701
(87) Internationale Veröffentlichungsnummer: WO 2014/067712

(56) Entgegenhaltungen:
- DE-A1-102010 027 925
- DE-C1- 4 311 863

## Beschreibung

### Stand der Technik

Die vorliegende Erfindung betrifft eine Transportvorrichtung mit einem steuerbaren Förderelement, insbesondere um einem Gieren um eine Hochachse des Förderelements entgegenzuwirken.

Transportsysteme zur Förderung von Produkten werden beispielsweise bei Förderaufgaben von Verpackungsmaschinen verwendet und sind aus dem Stand der Technik in unterschiedlichen Ausgestaltungen bekannt. Beispielsweise zeigt die DE 102010027925 A1 ein Transportsystem, bei dem ein bewegbares Förderelement mittels einer Linearmotor-Antriebsvorrichtung bewegt wird. Das Förderelement ist hierbei gelenkig ausgeführt, um kleinere Kurvenradien durchfahren zu können. Allerdings können während des Betriebs Situationen auftreten, in welchen die Förderelemente um ihre Hochachse gieren. Zwar ist an der ortsfesten Laufschiene eine Führungsschiene vorgesehen, allerdings ist für eine prozesssichere Auslegung des Transportsystems ein großes Führungsverhältnis notwendig, was zu einem relativ großen Aufbau des Transportsystems führt. Neben der Führungsschiene müssen insbesondere noch horizontale Führungsrollen am Förderelement vorgesehen werden, was eine Größe des Förderelements nachteilig beeinflusst. Es wäre daher wünschenswert, eine Transportvorrichtung zu haben, welche trotz kleiner Abmessung eine prozesssichere Durchführung von Transportaufgaben wahrnehmen kann.

Aus der DE 4311 863 C1 ist bereits ein Kurvenbandförderer mit Faltengurt bekannt, weicher die Merkmale des Oberbegriffs des Anspruchs 1 zeigt.

### Offenbarung der Erfindung

Die erfindungsgemäße Transportvorrichtung mit den Merkmalen des Anspruchs 1 weist demgegenüber den Vorteil auf, dass eine prozesssichere Führung möglich ist und trotzdem ein sehr kompakter und kleinbauender Aufbau erreicht werden kann. Hierdurch kann die erfindungsgemäße Transportvorrichtung leichter gebaut werden und insbesondere auch energetisch optimiert werden. Dies wird erfindungsgemäß dadurch erreicht, dass eine erste und eine zweite Linearmotor-Antriebsvorrichtung an der Transportvorrichtung vorgesehen sind. Die beiden Linear-Antriebsvorrichtungen können dabei neben der eigentlichen Vorschubbewegung auch zur Lagesicherung eines Förderelements, welches auf einer Laufschiene läuft, verwendet werden. Hierbei kann eine der beiden Linearantriebsvorrichtungen zur Erzeugung des Vorschubs verwendet werden und die andere der beiden Linearantriebsvorrichtungen zur Lagesicherung verwendet werden. Weiterhin kann auf eine mechanische Führung verzichtet werden. Die beiden Linearmotor-Antriebsvorrichtungen sind dabei außermittig am Förderelement angeordnet. D.h., die beiden Linearmotor-Antriebsvorrichtungen sind links und/oder rechts einer Mittelebene des Förderelements, wobei die Mittelebene in Förderrichtung gerichtet ist, angeordnet. Weiter ist eine Positionsbestimmungseinrichtung vorgesehen, welche eine Position und Ausrichtung des Förderelements bestimmt und an eine Steuereinrichtung übermittelt. Entsprechend derjeweiligen Position und Ausrichtung des Förderelements, insbesondere bei Drehungen um eine Hochachse des Förderelements, steuert die Steuereinrichtung eine und/oder beide Linearmotor-Antriebsvorrichtungen, um das Förderelement wieder in die gewünschte Ausgangslage zu bringen.

Die Unteransprüche zeigen bevorzugte Weiterbildungen der Erfindung.

Vorzugsweise umfasst die Positionsbestimmungseinrichtung einen Winkelsensor, welcher Winkelabweichungen des Förderelements zu einer Mittelachse der Laufschiene bzw. zur Bewegungsrichtung erfasst. Besonders bevorzugt erfasst der Winkelsensor dabei Winkelabweichungen zwischen einer Querachse des Förderelements und der Mittelachse der Laufschiene.

Weiter bevorzugt umfasst die Positionsbestimmungseinrichtung einen Beschleunigungssensor zur Erfassung einer Beschleunigung des Förderelements und/oder einer Änderung der Beschleunigung des Förderelements. Diese Beschleunigungswerte können noch zusätzlich zur Bestimmung der Position und Ausrichtung, mit welcher das Förderelement von der Idealposition abweicht, verwendet werden.

Gemäß einer weiteren bevorzugten Ausgestaltung der vorliegenden Erfindung umfasst die Positionsbestimmungseinrichtung ferner einen Geschwindigkeitssensor, welcher eine Geschwindigkeit des Förderelements und/oder eine Änderung der Geschwindigkeit des Förderelements erfasst. Auch diese Werte können zusätzlich zur Positionsbestimmung verwendet werden.

Weiter bevorzugt umfasst die Positionsbestimmungseinrichtung einen Gyrometer zur Erfassung von Drehbewegungen des Förderelements um seine Hochachse. Der Gyrometer kann allein oder zusätzlich in Verbindung mit anderen Sensoren verwendet werden, um Abweichungen des Förderelements von einer Idealposition zu erfassen.

Um eine besonders einfache und kostengünstige Positionsbestimmung durchführen zu können, umfasst die Positionsbestimmungseinrichtung einen ersten und zweiten Positionspunkt, welche am Förderelement angeordnet sind. Die beiden Positionspunkte sind in Bewegungsrichtung in einem fixierten Abstand voneinander beabstandet. Die Steuereinrichtung ist eingerichtet, anhand des Abstands eine Ausrichtung/Position des Förderelements zu bestimmen. Dies ist möglich, da bei einer Drehung des Förderelements um dessen Hochachse sich der Abstand zwischen den fixen Positionspunkten ändert, wobei die Änderung ein Maß für die Drehbewegung des Förderelements um seine Hochachse ist.

Um eine besonders sichere und stabile Führung des Förderelements an der Laufschiene zu erreichen, ist an der Laufschiene weiter bevorzugt eine zusätzliche Führungsschiene vorgesehen. Hierbei weist das Förderelement wenigstens eine, bevorzugt zwei, Horizontalrollen auf, welche an der Führungsschiene geführt sind. Bei zwei Horizontalrollen ist vorzugsweise die Führungsschiene im Betrieb zwischen den beiden Horizontalrollen vorgesehen.

Weiter bevorzugt sind die erste und zweite Linearmotor-Antriebsvorrichtung derart aufgebaut, dass Permanentmagnete der Linearmotor-Antriebsvorrichtung an den Förderelementen vorgesehen sind, und Spulen in der Laufschiene angeordnet sind. Alternativ ist es auch möglich, dass Spulen in den Förderelementen vorgesehen werden und Permanentmagnete an den Laufschienen angeordnet sind. Weiter alternativ ist vorzugsweise die erste Linearmotor-Antriebsvorrichtung derart aufgebaut, dass die Permanentmagnete an den Förderelementen und die Spulen an der Laufschiene vorgesehen sind, und die zweite Linearmotor-Antriebsvorrichtung ist derart aufgebaut, dass die Spulen an den Förderelementen und die Permanentmagnete an der Laufschiene angeordnet sind.

Die erfindungsgemäße Transportvorrichtung wird vorzugsweise in Verbindung mit Verpackungsmaschinen oder Abfüllen von zu verpackenden Gegenständen verwendet.

### Zeichnung

Nachfolgend werden bevorzugte Ausführungsbeispiele der Erfindung unter Bezugnahme auf die begleitende Zeichnung im Detail beschrieben, wobei in den verschiedenen Ausführungsbeispielen gleiche bzw. funktional gleiche Teile mit den gleichen Bezugszeichen bezeichnet sind. In der Zeichnung ist:
- Figur 1: eine schematische, perspektivische Ansicht einer Transportvorrichtung gemäß einem ersten Ausführungsbeispiel der Erfindung,
- Figur 2: eine schematische Ansicht von Förderelementen des ersten Ausführungsbeispiels im Normalzustand und im verdrehten Zustand, welche von unten dargestellt sind,
- Figur 3: eine schematische Ansicht einer Transportvorrichtung gemäß einem zweiten Ausführungsbeispiel der Erfindung und
- Figuren 4 bis 6: verschiedene Positionen eines Förderelements relativ zu einer Laufschiene zur Verdeutlichung des erfindungsgemäßen Prinzips.

### Bevorzugte Ausführungsformen der Erfindung

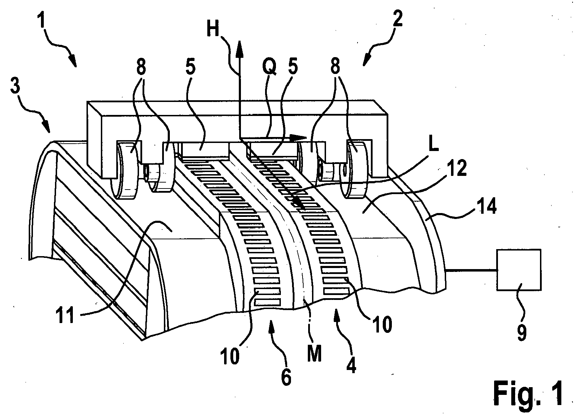

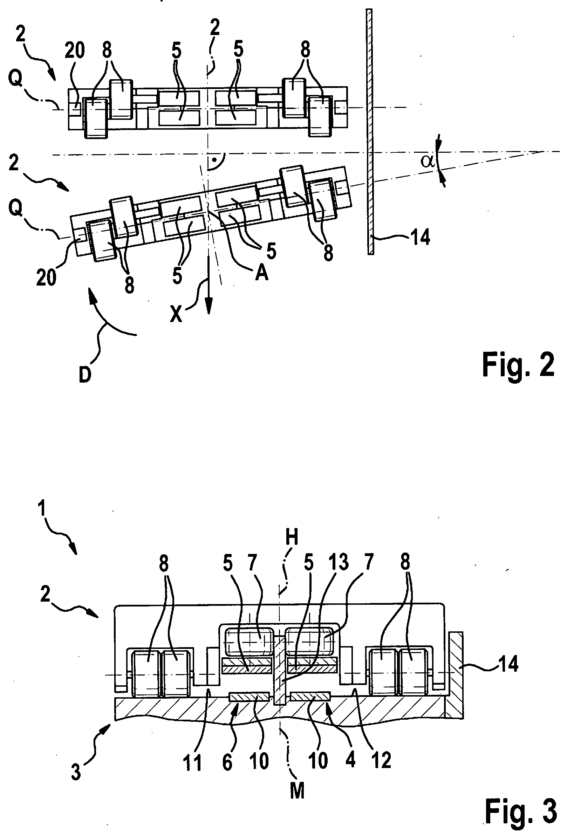

Nachfolgend wird unter Bezugnahme auf die Figuren 1 und 2 eine Transportvorrichtung 1 gemäß einem ersten Ausführungsbeispiel der Erfindung im Detail beschrieben.

Wie aus Figur 1 ersichtlich ist, umfasst die Transportvorrichtung 1 eine Laufschiene 3, welche bevorzugt umlaufend vorgesehen ist, und wenigstens ein Förderelement 2, welches sich auf dem durch die Laufschiene 3 definierten Laufpfad bewegt. Die Transportvorrichtung 1 umfasst eine erste Linearmotor-Antriebsvorrichtung 4 und eine zweite Linearmotor-Antriebsvorrichtung 6. Spulen 10 der beiden Linear-Antriebsvorrichtungen 4, 6 sind parallel zueinander an der Laufschiene 3 angeordnet. Hierbei ist jeweils eine Spulenreihe außermittig von einer Mittelebene M an der Laufschiene 3 angeordnet. Die erste Linearmotor-Antriebsvorrichtung 4 ist in Bewegungsrichtung X des Förderelements 2 links von der Mittelebene 11 angeordnet und die zweite Linearmotor-Antriebsvorrichtung 6 rechts von der Mittelebene M.

An dem Förderelement 2 sind zwei Reihen von Permanentmagneten 5 vorgesehen, welche ebenfalls außermittig des Förderelements 2 angeordnet sind. Wie insbesondere aus Figur 2 ersichtlich ist, sind hierbei pro Linearmotor-Antriebsvorrichtung jeweils zwei Permanentmagnete 5 am Förderelement 2 vorgesehen.

Weiterhin umfasst das Förderelement 2 vier Vertikalrollen 8, wobei jeweils ein Vertikalrollenpaar auf einer ersten Laufbahn 11 und einer zweiten Laufbahn 12, welche beide an der Laufschiene 3 vorgesehen sind, läuft. Die Vertikalrollen 8 sind dabei in Bewegungsrichtung X etwas versetzt zueinander angeordnet, um eine stabile Lage des Förderelements 2 sicherzustellen.

Wie insbesondere aus Figur 2 ersichtlich ist, entspricht die Bewegungsrichtung X einer Längsachse L des Förderelements 2. Im Betrieb können nun Situationen auftreten, in denen sich das Förderelement 2 um seine Hochachse H dreht. Ein derartiger Zustand ist in Figur 2 beim mit dem Bezugszeichen 2' gekennzeichneten Förderelement dargestellt. Hierbei hat sich das Förderelement 2' um die Hochachse H um einen Winkel α gedreht.

In diesem Ausführungsbeispiel umfasst das Förderelement 2 einen Winkelsensor 20, welcher Abweichungen einer Querachse Q des Förderelements relativ zur Bewegungsrichtung X erfassen kann. Die Winkelabweichung des Förderelements 2 wird einer Steuereinrichtung 9 zugeführt, welche entsprechend die beiden Linearmotor-Antriebsvorrichtungen 4, 6 ansteuert, so dass ein gegenläufiges Drehmoment auf das Förderelement 2' wirkt, um dieses wieder in die Ausgangsposition zu bringen, welche in Figur 2 im. oberen Teil dargestellt ist. In diesem Ausführungsbeispiel wird ein Drehmoment entsprechend dem Pfeil D auf das Förderelement 2' aufgebracht.

Die Transportvorrichtung 1 umfasst ferner eine Positionsbestimmungseinrichtung 14, welche parallel zur Laufschiene 3 seitlich an der Laufschiene 3 verläuft. Die Positionsbestimmungseinrichtung 14 ist mit einer Steuereinrichtung 9 verbunden, welche insbesondere die Linearmotor-Antriebsvorrichtungen 4, 6 ansteuert, um eine Bewegung des Förderelements 2 auf der Laufschiene 3 zu ermöglichen. Ferner ist die Steuereinrichtung 9 derart eingerichtet, dass das Förderelement 2 in richtiger Ausrichtung (in Figur 2 die obere dargestellte Position des Förderelements 2) gehalten wird, in welcher eine Querachse Q des Förderelements 2 senkrecht zur Bewegungsrichtung X verläuft.

Erfindungsgemäß können somit insbesondere Drehungen des Förderelements 2 um seine Hochachse H durch Vorsehen von zwei Linearmotor-Antriebsvorrichtungen 4, 6, welche außermittig an der Transportvorrichtung 1 angeordnet sind, ausgeglichen werden. Vorzugsweise wird dabei nur eine der beiden Linearmotor-Antriebsvorrichtungen 4, 6 für den Vortrieb verwendet und die andere der beiden Linearmotor-Antriebsvorrichtungen 4, 6 zum Positionsausgleich verwendet.

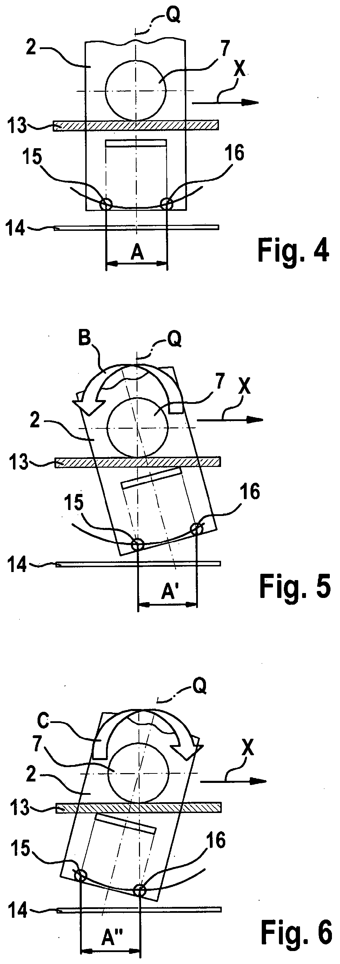

Die Figuren 3 bis 6 zeigen eine Transporteinrichtung 1 gemäß einem zweiten Ausführungsbeispiel der Erfindung. Wie insbesondere aus Figur 3 ersichtlich ist, umfasst die Laufschiene 3 zusätzlich noch eine Führungsschiene 13, welche senkrecht von den Laufflächen der Laufschiene 3 vorsteht. Die Führungsschiene 13 ist dabei zwischen den beiden Linearmotor-Antriebsvorrichtungen 4, 6 in der Mittelebene M angeordnet. Am Förderelement 2 sind zusätzlich zwei Horizontalrollen 7 angeordnet, welche durch die Führungsschiene 13 seitlich geführt werden. Hierbei können trotz der beidseitigen Führung trotzdem Drehungen des Förderelements 2 um seine Hochachse H auftreten. Dies ist in den Figuren 4 bis 6 schematisch verdeutlicht. Figur 4 zeigt dabei den Idealzustand des Förderelements 2 relativ zur Laufschiene 3, wobei eine Querachse Q des Förderelements 2 senkrecht zur Bewegungsrichtung X ist. In Figur 5 hat sich das Förderelement 2 in Richtung des Pfeils B relativ zur Laufschiene 3 gedreht. In Figur 6 hat sich das Förderelement 2 relativ zur Laufschiene 3 in Richtung des Pfeils C gedreht.

In diesem zweiten Ausführungsbeispiel sind am Förderelement 2 ein erster Positionspunkt 15 und ein zweiter Positionspunkt 16 seitlich am Förderelement angeordnet. Die beiden Positionspunkte 15, 16 weisen einen fixen Abstand A auf (vergleiche Figur 4). Der fixe Abstand A kann durch die seitliche Positionsbestimmungseinrichtung 14 erfasst werden. Wenn sich, wie in Figur 5 gezeigt, das Förderelement 2 um seine Hochachse H in Richtung des Pfeils B dreht, ändert sich der Abstand zwischen den beiden Positionspunkten 15, 16 zu einem Abstand A'. Da der Abstand der beiden Positionspunkte 15, 16 immer in Bewegungsrichtung X bestimmt wird, ist der Abstand A' kleiner als der ursprüngliche Abstand A. Daher kann eine Steuereinrichtung 9 darauf schließen, dass eine Rotation des Förderelements stattgefunden hat und entsprechende Gegenmaßnahmen durch Ansteuerung einer oder beider Linearmotor-Antriebsvorrichtungen 4, 6 vornehmen. In Figur 6 erfasst die Positionsbestimmungseinrichtung 14 aufgrund der Verdrehung des Förderelements 2 in Richtung des Pfeils C einen Abstand A", so dass die Steuereinrichtung 9 entsprechend dem auf das Förderelement 12 wirkenden Drehmoment entgegenwirken kann.

Zu den beschriebenen Ausführungsbeispielen sei somit angemerkt, dass es erfindungsgemäß möglich ist, mittels zweier linearer Motor-Antriebsvorrichtungen 4, 6 einerseits einen Vortrieb des Förderelements 2 sicherzustellen und andererseits ein Drehmoment auf das Förderelement 2 aufzubringen, um einem Gieren (Drehen des Förderelements 2 um seine Hochachse H) entgegenzuwirken. Hierbei können durch eine sehr feine Positionsbestimmungseinrichtung 14 schon kleinste Änderungen, d.h. Drehungen des Förderelements 2 relativ zur Laufschiene 3 erfasst werden und entsprechend sofort Gegenmaßnahmen durch Ansteuern eines oder beider Linearmotor-Antriebsvorrichtungen 4,6 vorgenommen werden. Hierdurch kann ein sicheres und schnelles Bewegen des Förderelements 2 sichergestellt werden. Trotzdem kann ein Aufbau der Transportvorrichtung 1 sehr kleinbauend und kompakt sein. Ferner sei angemerkt, dass zusätzlich noch weitere Sensoren, beispielsweise zur Erfassung einer Geschwindigkeit des Förderelements und/oder einer Geschwindigkeitsänderung und/oder Erfassung einer Beschleunigung des Förderelements und/oder einer Beschleunigungsänderung aufgenommen werden können, um entsprechend ein genaueres Gegensteuern gegen unerwünschte Bewegungen bzw. Drehungen des Förderelements 2 zu realisieren.

## Patentansprüche

1. Transportvorrichtung zur Förderung eines Produkts, umfassend
- ein bewegbares Förderelement (2) zum Fördern des Produkts,
- eine ortsfeste Laufschiene (3), welche einen Laufpfad für das Förderelement (2) definiert,
- eine erste Linearmotor-Antriebsvorrichtung (4),
- eine zweite Linearmotor-Antriebsvorrichtung (6),
- wobei die erste und zweite Linearmotor-Antriebsvorrichtung (4, 6) zum Antreiben das Förderelements (2) außermittig am Förderelement (2) und der Laufschiene (3) angeordnet sind,
- eine Steuereinrichtung (9), welche die beiden Linearmotor-Antriebsvorrichtungen (4, 6) ansteuert, **gekennzeichnet durch**
- eine Sensoreinrichtung, welche eine Ausrichtung des Förderelements (2) relativ zur Laufschiene (3) erfasst und an die Steuereinrichtung (9) übermittelt,
- wobei die erste und zweite Linearmotor-Antriebsvorrichtung (4, 6) eingerichtet sind, das Förderelement (2) anzutreiben und ein Drehmoment auf das Förderelement (2) auszuüben und
- wobei die Steuereinrichtung eingerichtet ist, **durch** Ansteuern der beiden Linearmotor-Antriebsvorrichtungen zum Aufbringen eines Drehmoments um eine Hochachse (H) des Förderelements (2) eine Ausrichtung des Förderelements (2) durchzuführen.

2. Transportvorrichtung nach Anspruch 1, **dadurch gekennzeichnet, dass** die Sensoreinrichtung einen Winkelsensor (20) umfasst, welcher Winkelabweichungen des Förderelements (2) zu einer Bewegungsrichtung (X) erfasst.

3. Transportvorrichtung nach einem der vorhergehenden Ansprüche, wobei die Sensoreinrichtung einen Beschleunigungssensor zur Erfassung einer Beschleunigung des Förderelements (2) und/oder zur Erfassung einer Änderung einer Beschleunigung des Förderelements (2) erfasst.

4. Transportvorrichtung nach einem der vorhergehenden Ansprüche, **dadurch gekennzeichnet, dass** die Sensoreinrichtung einen Geschwindigkeitssensor zur Erfassung einer Geschwindigkeit des Förderelements (2) und/oder einer Änderung einer Geschwindigkeit des Förderelements (2) umfasst.

5. Transportvorrichtung nach einem der vorhergehenden Ansprüche, **dadurch gekennzeichnet, dass** die Sensoreinrichtung einen Gyrometer zur Erfassung von Drehbewegungen des Förderelements (2) umfasst.

6. Transportvorrichtung nach einem der vorhergehenden Ansprüche, **dadurch gekennzeichnet, dass** die Sensoreinrichtung eine Positionsbestimmungseinrichtung (14) und einen ersten Positionspunkt (15) und einen zweiten Positionspunkt (16) umfasst, wobei die beiden Positionspunkte (15, 16) mit einem fixen Abstand (A) am Förderelement (2) angeordnet sind und wobei die Steuereinrichtung (9) eingerichtet ist, anhand des Abstandes (A) eine Ausrichtung des Förderelements (2) vorzunehmen.

7. Transportvorrichtung nach einem der vorhergehenden Ansprüche, **dadurch gekennzeichnet, dass** die Laufschiene (3) ferner eine Führungsschiene (13) umfasst und das Förderelement (2) eine erste und/oder zweite Horizontalrolle (7) umfasst, wobei die Horizontalrolle (7) an der Führungsschiene (13) geführt ist.

8. Transportvorrichtung nach einem der vorhergehenden Ansprüche, **dadurch gekennzeichnet, dass** die erste und zweite Linearmotor-Antriebsvorrichtung (4, 6) jeweils Permanentmagnete (5) und Spulen (10) umfasst,
- wobei die Permanentmagnete (5) am Förderelement (2) angeordnet sind und die Spulen (10) an der Laufschiene (3) angeordnet sind, oder
- wobei die Spulen (10) an dem Förderelement (2) angeordnet sind und die Permanentmagnete (5) an der Laufschiene (3) angeordnet sind, oder
- wobei für die erste Linearmotor-Antriebsvorrichtung (4) Permanentmagnete (5) am Förderelement (2) angeordnet sind und Spulen (10) an der Laufschiene (3) angeordnet sind und für die zweite Linearmotor-Antriebsvorrichtung (6) Spulen (10) am Förderelement (2) angeordnet sind und Permanentmagnete (5) an der Laufschiene (3) angeordnet sind.

9. Verpackungsvorrichtung, umfassend eine Transportvorrichtung nach einem der vorhergehenden Ansprüche.

## Claims

1. Transport device for conveying a product, said transport device including
- a movable conveying element (2) for conveying the product,
- a stationary running rail (3) which defines a running path for the conveying element (2),
- a first linear motor driving device (4),
- a second linear motor driving device (6),
- wherein the first and second linear motor driving devices (4, 6) for driving the conveying elements (2) are arranged eccentrically on the conveying element (2) and the running rail (3),
- a control device (9) which actuates the two linear motor driving devices (4, 6), **characterized by**
- a sensor device which detects an alignment of the conveying element (2) relative to the running rail (3) and transmits this to the control device (9),
- wherein the first and second linear motor driving devices (4, 6) are set up to drive the conveying element (2) and to exert a torque on the conveying element (2) and
- wherein the control device is set up to carry out an alignment of the conveying element (2) as a result of controlling the two linear motor driving devices to apply a torque about a vertical axis (H) of the conveying element (2).

2. Transport device according to Claim 1, **characterized in that** the sensor device includes an angle sensor (20) which detects angular deviations of the conveying element (2) with respect to a direction of movement (X).

3. Transport device according to one of the preceding claims, wherein the sensor device detects an acceleration sensor for detecting an acceleration of the conveying element (2) and/or for detecting a change in an acceleration of the conveying element (2).

4. Transport device according to one of the preceding claims, **characterized in that** the sensor device includes a speed sensor for detecting a speed of the conveying element (2) and/or a change in a speed of the conveying element (2).

5. Transport device according to one of the preceding claims, **characterized in that** the sensor device includes a gyrometer for detecting rotary movements of the conveying element (2).

6. Transport device according to one of the preceding claims, **characterized in that** the sensor device includes a position determining device (14) and a first position point (15) and a second position point (16), wherein a fixed spacing (A) is arranged between the two position points (15, 16) on the conveying element (2) and wherein the control device (9) is set up to perform an alignment of the conveying element (2) by way of the spacing (A).

7. Transport device according to one of the preceding claims, **characterized in that** the running rail (3) additionally includes a guide rail (13) and the conveying element (2) includes a first and/or second horizontal roller (7), wherein the horizontal roller (7) is guided on the guide rail (13).

8. Transport device according to one of the preceding claims, **characterized in that** the first and second linear motor driving devices (4, 6) each include permanent magnets (5) and coils (10),
- wherein the permanent magnets (5) are arranged on the conveying element (2) and the coils (10) are arranged on the running rail (3), or
- wherein the coils (10) are arranged on the conveying element (2) and the permanent magnets (5) are arranged on the running rail (3), or
- wherein permanent magnets (5) are arranged on the conveying element (2) and coils (10) are arranged on the running rail (3) for the first linear motor driving device (4) and coils (10) are arranged on the conveying element (2) and permanent magnets (5) are arranged on the running rail (3) for the second linear motor driving device (6).

9. Packaging device, including a transport device according to one of the preceding claims.

## Revendications

1. Dispositif de transport pour transporter un produit, comprenant :
- un élément de transport (2) mobile pour transporter le produit ;
- un rail de roulement (3) fixe sur place définissant un chemin de roulement pour l'élément de transport (2) ;
- un premier dispositif d'entraînement de moteur linéaire (4) ;
- un deuxième dispositif d'entraînement de moteur linéaire (6) ;
- le premier et le deuxième dispositif d'entraînement de moteur linéaire (4, 6) étant disposés de façon excentrée par rapport à l'élément de transport (2) et au rail de roulement (3) pour entraîner l'élément de transport (2) ;
- un dispositif de commande (9) commandant les deux dispositifs d'entraînement de moteur linéaire (4, 6) ; **caractérisé par** :
- un dispositif de détection détectant un alignement de l'élément de transport (2) par rapport au rail de roulement (3) et la transmettant au dispositif de commande (9) ;
- le premier et le deuxième dispositif d'entraînement de moteur linéaire (4, 6) étant conçus pour entraîner l'élément de transport (2) et pour exercer un couple de rotation sur l'élément de transport (2) ; et
- le dispositif de commande étant conçu pour réaliser un alignement de l'élément de transport (2) en commandant les deux dispositifs d'entraînement de moteur linéaire de façon à appliquer un couple de rotation sur un axe vertical (H) de l'élément de transport (2).

2. Dispositif de transport selon la revendication 1, **caractérisé en ce que** le dispositif de détection comprend un capteur d'angle (20) détectant les écarts d'angle de l'élément de transport (2) par rapport à une direction de déplacement (X).

3. Dispositif de transport selon l'une quelconque des revendications précédentes, le dispositif de détection détectant un capteur d'accélération pour détecter une accélération de l'élément de transport (2) et/ou pour détecter une variation d'une accélération de l'élément de transport (2).

4. Dispositif de transport selon l'une quelconque des revendications précédentes, **caractérisé en ce que** le dispositif de détection comprend un détecteur de vitesse pour détecter une vitesse de l'élément de transport (2) et/ou une variation de vitesse de l'élément de transport (2).

5. Dispositif de transport selon l'une quelconque des revendications précédentes, **caractérisé en ce que** le dispositif de détection comprend un gyromètre pour détecter des mouvements de rotation de l'élément de transport (2).

6. Dispositif de transport selon l'une quelconque des revendications précédentes, **caractérisé en ce que** le dispositif de détection comprend un dispositif de détermination de position (14) et un premier point de positionnement (15) et un deuxième point de positionnement (16), les deux points de positionnement (15, 16) étant disposés à une distance (A) fixe au niveau de l'élément de transport (2) et le dispositif de commande (9) étant conçu pour effectuer un alignement de l'élément de transport (2) à l'aide de la distance (A).

7. Dispositif de transport selon l'une quelconque des revendications précédentes, **caractérisé en ce que** le rail de roulement (3) comprend en outre un rail de guidage (13) et que l'élément de transport (2) comprend un premier et/ou un deuxième rouleau horizontal (7), le rouleau horizontal (7) étant guidé au niveau du rail de guidage (13).

8. Dispositif de transport selon l'une quelconque des revendications précédentes, **caractérisé en ce que** le premier et le deuxième dispositif d'entraînement de moteur linéaire (4, 6) comprennent respectivement des aimants permanents (5) et des bobines (10) ;
- les aimants permanents (5) étant disposés au niveau de l'élément de transport (2) et les bobines (10) étant disposées au niveau du rail de roulement (3) ; ou
- les bobines (10) étant disposées au niveau de l'élément de transport (2) et les aimants permanents (5) étant disposés au niveau du rail de roulement (3) ; ou
- pour le premier dispositif d'entraînement de moteur linéaire (4), les aimants permanents (5) étant disposés au niveau de l'élément de transport (2) et les bobines (10) étant disposées au niveau du rail de roulement (3) et pour le deuxième dispositif d'entraînement de moteur linéaire (6), les bobines (10) étant disposées au niveau de l'élément de transport (2) et les aimants permanents (5) étant disposés au niveau du rail de roulement (3).

9. Dispositif de conditionnement, comprenant un dispositif de transport selon l'une quelconque des revendications précédentes.
